# EUROPEAN PATENT APPLICATION

(11) **EP 3 437 734 A1**
(43) Date of publication of application: **06.02.2019**
(21) Application number: 17184497.0
(22) Date of filing: 02.08.2017
(51) Int. Cl.: B01J 20/34, B01D 53/04, B01J 20/18, B01J 20/28, F28F 13/00

(54) **ADSORBER SUITABLE FOR TEMPERATURE SWING ADSORPTION**

(71) Applicant: CASALE SA, 6900 Lugano (CH)
(72) Inventor: Ostuni, Raffaele, 6900 Lugano (CH); Guarino, Andrea, 6932 Breganzona (CH); Ravasio, Stefano Valerio, 6900 Lugano (CH)
(74) Representative: Zardi, Marco

(57) **Abstract**

Adsorber for indirectly heated temperature swing adsorption, comprising: at least one channel containing at least an adsorbent material in the form of solid adsorbent particles, at least one insert made of a thermally conductive material and inserted into said at least one channel, wherein said at least one insert has a void fraction and said adsorbent particles fill at least partially said void fraction of the insert.

## Description

### Field of the invention

The present invention relates to an equipment and process for removing a target component from a feed gas by adsorption over an adsorbent material. In particular, the present invention relates to an equipment and process wherein regeneration of the adsorbent material comprises at least a step of indirect heating.

### Prior Art

Temperature swing adsorption (TSA) is a known process to remove a target component from a feed gas. A field of particular interest is the use of TSA for removing carbon dioxide from a process gas or combustion flue gas.

In a TSA process, the feed gas is contacted with a suitable adsorbent material which captures the target component. The adsorbent material may be in the form of solid particles forming an adsorbent bed. Periodically, the adsorbent material must be regenerated by removing the captured target component. In a TSA process, regeneration is performed by heating the adsorbent material. Regeneration results in the adsorbent releasing a gaseous current rich in the target component. After regeneration, the adsorbent is cooled and the process can be repeated.

In indirectly heated TSA, the adsorbent material is heated or cooled indirectly, that is no heat transfer medium comes into direct contact with the adsorbent. Typically, the medium transfers or receives heat to/from the surface of an enclosure containing the adsorbent material.

Indirectly heated TSA may be carried out in packed beds of adsorbent beads or pellets, which are commonly used in the prior art for the following reasons: easy filling/emptying of vessels, high achievable adsorbent volume loading, easy and cheap manufacturing. The latter is an important requirement since adsorbent is required in large quantities.

Indirectly heated TSA is attractive for some reasons: it avoids contamination of the desorbed gas and enables exploitation of waste heat sources. However, the prior art systems suffer from poor heat transfer due to the lack of a direct contact. Poor heat transfer may also lead to non-uniform heating or cooling and formation of hot spots within the adsorbent.

To compensate for the poor heat transfer, a relatively high ratio of heat exchange surface over adsorbent volume must be adopted. For example, when the adsorbent is contained within tubes, the heat exchange surface can be increased by using a large number of small tubes. However, this results in increased size and cost, and increased thermal inertia of the system. A high thermal inertia means a longer time for heating or cooling the adsorbent and, consequently, a slower operation and reduced productivity of the system. The productivity of a TSA system is defined as the recovered amount of target component per unit of mass of the adsorbent and per unit of time, for example in a TSA system for removing CO2 the productivity is measured in kg_{CO2} / (kg_{ads} h). A system with a greater thermal inertial will remove and deliver less CO2 for a given amount of adsorbent and a given time.

To overcome the aforementioned heat exchange limitations, structured adsorbents have also been proposed instead of packed beds. An example is provided in US 9308486, which discloses a structured adsorbent sheet including a nano-adsorbent powder and a binder material, wherein the nano-adsorbent powder is combined with the binder material to form an adsorbent material, and a porous electrical heating substrate, wherein the adsorbent material is applied to the porous electrical heating substrate thereby forming a structured adsorbent sheet.

However, the structured adsorbents are expensive to manufacture, difficult to produce in large quantities and entail difficult filling/emptying operations.

### Summary of the invention

The invention aims to overcome the aforementioned drawbacks of the prior art. In particular, the invention aims to provide a drastic reduction of the heating/cooling step time duration, and consequently a higher productivity compared to the prior art.

The aims are reached with a novel adsorber according to the claims.

The adsorber comprises at least one channel containing at least an adsorbent material in the form of solid adsorbent particles, at least one insert made of a thermally conductive material and inserted into said at least one channel, said at least one insert having a void fraction and said adsorbent particles filling at least partially said void fraction of the insert.

Said adsorber is suitable to carry out a process of removal of a target component from a feed gas comprising: passage of the feed gas through said at least one channel containing particles of the at least one adsorbent material and said at least one insert, and regeneration of the adsorbent comprising a step of indirect heating of the adsorbent through an external wall of said at least one channel. Said regeneration may also comprise direct heating of the adsorbent.

During the passage of the feed gas through said at least one channel, the target component is adsorbed over the adsorbent material. During the regeneration, the adsorbed target component is released as a gaseous current rich in the target component. After regeneration, the adsorbent material is advantageously cooled and the process is repeated. Cooling of the adsorbent comprises a step of indirect heat exchange and optionally a step of direct heat exchange.

Said insert is preferably inert - or at least less active than the adsorbent material - to adsorption during passage of the feed gas through said at least one channel.

Said at least one channel can be delimited by a suitable enclosure. The enclosure can be a tube or have a different shape, such as a polygonal cross section, according to various embodiments. In use, a surface of the enclosure, for example the lateral surface of the enclosure, acts as heat exchange surface in contact with a heat exchange medium for heating or cooling the adsorbent.

In some embodiments, the channel is delimited by adjacent plates internally traversed by a heat exchange medium.

In a preferred embodiment, the adsorber comprises a plurality of channels in parallel. For example a bundle of tubes or a set of plates provide several channels in parallel.

The adsorber can have a process gas side and a heat transfer medium side. Said sides are separated and not in communication, to provide for indirect heat exchange. The process gas side comprises the inside of said at least one channel. The heat transfer medium side is in communication with inlet and outlet of a heat exchange medium.

In a tube bundle embodiment, for example, each tube contains one or more inserts and the adsorbent. The inside of tubes provides the process gas side, traversed by the feed gas containing the target component. The shell side around the tubes provides the heat transfer medium side, wherein a suitable heat exchange medium can be admitted. The lateral surfaces of tubes provide the heat exchange surface for indirect heat exchange between the heat transfer medium outside and the adsorbent inside.

In an embodiment with heat exchange plates, the heat transfer medium side is formed by the inside of the plates traversed by the heat transfer medium, while the process gas side is given by the channels between the plates.

The insert enhances the heat transfer coefficient between the heat transfer medium and the adsorbent.

According to preferred embodiments, the insert is any of: an open cell foam, a matrix, a monolithic insert with a foam structure or a sponge structure or lattice structure or grid-like structure. A preferred embodiment is open cell foam and a particularly preferred embodiment is a metal foam or metal sponge.

The insert includes a base material and a significant void fraction. The void fraction can be defined as the ratio (V - Vm) / V, wherein V is the volume of the insert including the voids, and Vm is the volume of the insert excluding the voids. For open-cell foams, the void fraction is formed by the cell openings and pores (voids).

It is preferred that the base material of the insert has a high thermal conductivity and a low mass density. The thermal conductivity is preferably at least 5 W/m K, more preferably at least 10 W/m K and particularly preferably at least 50 W/m K. Any appropriate material can be used, provided it can withstand the conditions of the process. In most cases a metal material is preferred; a particularly preferred metal material is aluminium.

A preferred embodiment for open-cell foams has cell openings and pores cross section in the range of 500 microns to 6 mm; preferably 1 to 4 mm and more preferably 1.5 to 3 mm.

In a preferred embodiment the void fraction of the insert is at least 60%. Preferably said void fraction is at least 70%, more preferably 70% to 99%, even more preferably 80% to 98%.

The insert has preferably a cross section which is equal or substantially equal to the cross section of the channel. The cross section is understood in a plane perpendicular to a longitudinal direction of the channel, which is also a main flowing direction of the feed gas through the channel. Having a cross section equal or nearly equal to the channel, the insert is in direct contact or leaves only a small gap with the enclosure. Such direct contact or small gap provides better heat transfer. For example, in an embodiment where the enclosure of the channel is a tube, the insert has preferably a circular cross section with a diameter equal to, or slightly smaller than, the inner diameter of said tube.

According to various embodiments, the insert can be a single continuous body within the enclosure, or can be made of several parts. For example the insert may have the same length as the channel, or several inserts may be stacked within the channel.

A single, continuous insert has the advantage of continuity for heat transport both in axial direction and on the plane perpendicular to the axial direction, namely in the radial or transversal direction. However an embodiment with several stacked inserts can be preferred in some cases because of easier loading of adsorbent particles and more homogeneous loading of adsorbent particles in the insert.

The adsorbent material is a material with appropriate selectivity for the target component. For CO2 capture, preferred adsorbents include a zeolite or activated carbon. The adsorbent is in the form of particles, i.e. it has a generally granular form. The adsorbent is for example in the form of pellets or beads or granules.

The adsorbent is packed within the enclosure inside and/or around the insert. The adsorbent particle size and geometrical shape are such that particles can flow in and fill the voids of the insert. The insert voids and adsorbent particle dimensions are selected to allow for appropriate loading of the adsorbent material. For example with a foam insert, by choosing the appropriate foam dimensions, the adsorbent material will simply percolate into the structure of the foam.

In the preferred embodiment of open cell foams, the adsorbent particle size is small enough to flow through and fit in the cells. The adsorbent component is loaded within the enclosure, filling the voids of the open cell foam. Particles dimensions and shape are small enough to fill the void in the conductive foam.

Non-limiting examples of particle shape include spheres and cylinders. Preferably the characteristic size of particles is less than 3 mm, preferably between 2 mm and 100 micron, more preferably between 1 mm and 500 micron. The term of characteristic size refers to one or more length(s) depending on the shape of the particles, for example the diameter for spherical particles or the base diameter and height for cylindrical pellets.

Adsorbent particles size can be selected to keep the conductivity high enabling the use of inserts with relatively low void fraction and relatively small openings, without leading to high pressure drop or particle fluidization. To meet the above goals, the characteristic size of the particles is preferably smaller than one third, more preferably smaller than one fourth of a size of the openings of the cells.

In some embodiments, the adsorber comprises multiple channels.

The adsorber can be embodied as a shell-and-tube reactor wherein each tube corresponds to a channel. A preferred embodiment of a shell-and-tube adsorber has tubes with inner diameter larger than 25 mm, more preferably larger than 35 mm, even more preferably larger than 50 mm.

In an alternative embodiment, the adsorber is embodied as a so-called plate reactor comprising flat heat exchange bodies immersed in a bed of adsorbent material and internally traversed by the heat exchange medium. Preferably the heat exchange bodies are in the form of thin, elongated plates. The channels are therefore formed between adjacent plates and the inserts are placed between the plates. The plates can be parallel or radially arranged according to different embodiments.

According to a preferred embodiment, the plates are parallel and more than 25 mm distant; even more preferably the plates are parallel and more than 50 mm distant.

In a preferred embodiment, the plates have a smooth surface to enable installation of the insert with minimum gap from the heat exchange surface.

In the abovementioned embodiment of plate reactor, the feed gas may traverse the adsorbent axially or radially or with a mixed axial-radial flow, according to different embodiments.

A system based on the invention includes at least one adsorber as described above. A system with a single adsorber operates in a batch mode, performing the steps of adsorption, heating/regeneration and cooling. A system comprising two or more adsorbers can ensure continuous operation. For example, in order to ensure continuous adsorption from a continuous feed gas containing the target component, at least an adsorber undergoing adsorption must be provided at any time. Typically, the higher the ratio of time duration of the total cycle over the time duration of the adsorption step, the higher the number of adsorbers required to ensure continuous operation.

A further aspect of the invention is a process according to the claims. Preferably the process comprises removing CO2 from a gas.

According to a particular embodiment, the regeneration of the adsorbent comprises direct heating of the adsorbent, and indirect heating of the adsorbent through the channel external wall.

The process can be one of the following: a temperature swing adsorption process (TSA), wherein regeneration is performed by heating the adsorbent material; a pressure temperature swing adsorption process (PTSA), wherein regeneration is performed by heating and depressurizing the adsorbent material; a vacuum temperature swing adsorption process (VTSA), wherein regeneration is performed by heating and depressurizing the adsorbent material to sub-atmospheric pressure.

The advantages of the invention can be summarized as follows. The insert acts as a continuous matrix which effectively transports heat between the enclosure of the channels (e.g. the surface of tubes) and the granular adsorbent material. Therefore the heating and cooling of the adsorbent material is significantly faster compared to prior art adsorbers. Furthermore, the enhanced heat transfer coefficient entails better temperature control by means of cooling during the adsorption, avoiding hot spots, which increases the adsorbent cyclic capacity.

For example a foam insert is "packed" with the solid particles of adsorbent, leading to a very intimate contact between the thermally conductive base material of the insert and the granular adsorbent.

Both advantages of faster heating/cooling and better control of temperature entail a comparatively much higher productivity than prior art systems. A higher productivity entails smaller equipment size (and less adsorbent) for a given target capacity, hence smaller investment cost. A related advantage of the invented system is also a lower energy consumption.

In preferred embodiments, the voids of the structured conductive inserts have small dimensions comparable to the size of the adsorbent particles, e.g. less than one order of magnitude larger than the adsorbent particle size. The maximum distance between conductive surfaces is therefore comparatively much smaller than in the prior art, for example being of the order of 2 mm rather than 30 mm. Hence, the adsorbent is finely dispersed in a conductive matrix, so that the main heat transfer mechanism becomes heat conduction. Since the insert is made of a highly conductive material, heat is transported very efficiently.

Very advantageously the heat transfer mechanism is much less affected by the flow conditions than the packed bed of the prior art TSA system, wherein the heat transfer is largely affected by convection. It has to be noted that the prevailing conditions of the TSA process entail low convective heat transfer coefficients, due to the low pressure, low velocities, low density, and low conductivity of flue gas. Therefore it is a considerable advantage to transfer heat mainly by conduction rather than convection.

A further advantage of the invention is a reduced number of adsorbers required to ensure continuous operation. This is due to the shortening of the total cycle time (especially the heating and cooling time) compared to the adsorption time.

Another advantage of the invention is that less heat exchange surface is required to heat/cool the adsorbent bed. Therefore, a smaller number of larger heat exchange bodies can be used, e.g. tubes of a larger diameter or more distanced plates, compared to the prior art. Related advantages include: reduced mass of metal per unit of adsorbent; reduction of the thermal inertia of the system; easier construction of the adsorber, easier loading of adsorbent and inserts.

A further advantage of the invention is that it can use a packed bed of adsorbent particles, instead of structured adsorbents.

A further advantage of the invention is that it is suitable for indirect heat supply and removal by an external fluid.

A further advantage of inserts made of aluminium is that aluminium has a relatively high thermal expansion coefficient, e.g. compared to steel. During regeneration, the expansion of the aluminium insert reduces the gap between the insert and the enclosure of the channel (e.g. steel tube), further improving the heat transfer process.

A further advantage of open-cell foam insert is that foams enable mixing in directions perpendicular to the flow, avoiding flow segregation of the streams crossing the adsorbent. Another advantage of open-cell foam insert is that it can be crossed not only in the axial direction, but also in the axial-radial or pure radial direction.

The inserts of the invention surprisingly improve the productivity and reduce the thermal inertia thanks to their ability to transport heat to/from the adsorbent material, as above explained.

The advantages of the invention will be elucidated with the help of the following description of preferred and non-limiting embodiments.

### Brief description of the drawings

- Figs. 1: illustrates the operation of a TSA system.
- Fig. 2: illustrates a first embodiment of the invention.
- Fig. 3: is a detail of Fig. 2.
- Fig. 4: illustrates a variant of the first embodiment of the invention.
- Figs. 5 to 7: illustrate a second embodiment of the invention.
- Fig. 8: illustrates a tube filled with adsorbent, according to the prior art.

### Description of preferred embodiments

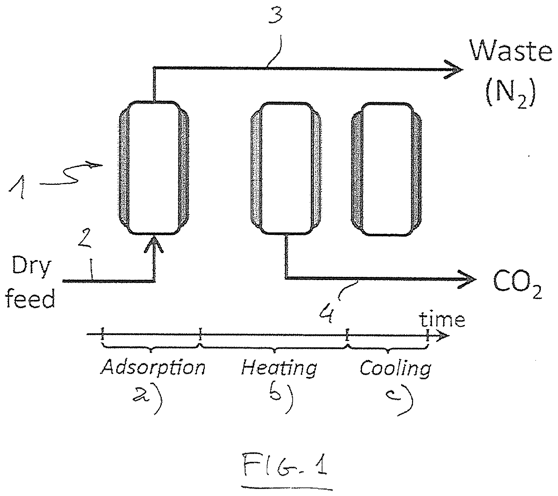

Fig. 1 shows an adsorber reactor 1 performing different stages of a TSA process, namely a) adsorption, b) heating, and c) cooling.

During step a), a feed gas 2 is introduced in the adsorber 1. The feed gas 2 contains a target component to be removed, for example CO2, which is captured by the adsorbent material contained in the adsorber 1. A waste gas 3, for example containing mainly nitrogen, is withdrawn from the adsorber 1 during said step a).

In step b), the adsorbent material is heated and a CO2-rich stream 4 is liberated. The so obtained CO2 can be sequestrated or directed to a further use, e.g. the synthesis of urea.

In step c), the adsorbent of reactor 1 is cooled back to an appropriate temperature for starting a new cycle of adsorption.

Fig. 1 illustrates the time of adsorption, heating and cooling.

The steps of heating and cooling are performed by indirect heat exchange, i.e. the heating or cooling medium does not come into direct contact with the adsorbent.

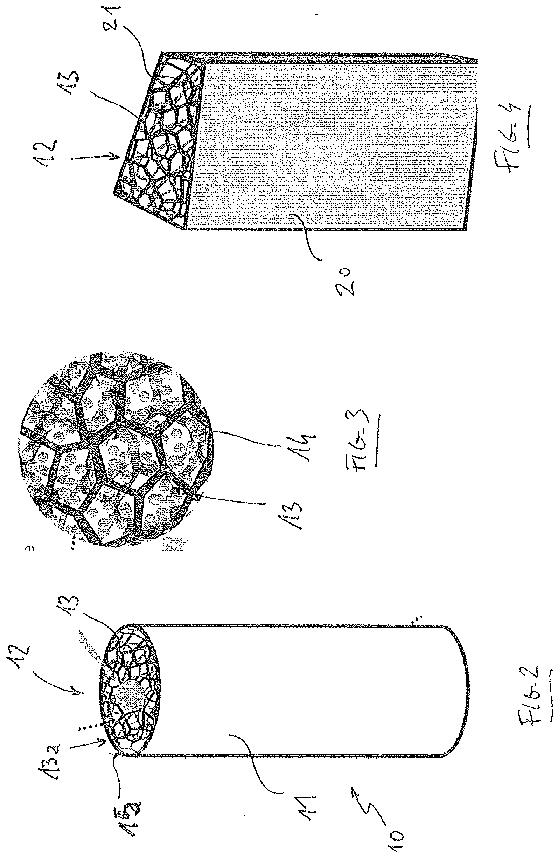

The adsorber 1 may contain a plurality of tubes or plates. Fig. 2 illustrates an embodiment of a tube 10 that can be contained in the adsorber 1.

The tube 10 has a lateral outer surface 11 and delimits a channel 12. The channel 12 in this exemplary embodiment is the inside of the tube 10.

Said channel 12 contains an insert 13 and solid particles 14 of a suitable adsorbent. The insert 13 and adsorbent particles 14 are better visible in Fig. 3. This figure shows the adsorbent material in the form of small spherical particles.

The insert 13 is made for example of metal and has an overall diameter which is substantially the same as the inner diameter of the tube 10, thus filling the cross section of the channel 12. Therefore, a boundary region 13a of the insert 13 is in contact with, or very close to, the inner surface 15 of the tube 10.

The insert 13 has a foam or sponge irregular structure, providing basically a matrix of metal and a significant void fraction. The adsorbent particles 14 fill the void fraction of the insert 13, as illustrated. Therefore, an intimate contact between the metal matrix of the insert 13 and the adsorbent particles 14 is achieved.

The insert 13 preferably extends longitudinally in the direction of the axis of the tube 10. In one embodiment, the insert 13 has the same length as the tube 10, which means that each tube 10 contains a single insert. In other embodiments, the tube 10 contains a stack of several inserts 13, each insert 13 being shorter than the tube 10 in the longitudinal direction.

During step b), a heating medium circulates in the shell side of the absorber 1 and heats the surface 11 of the tube 10. The insert 13 acts as a heat transfer enhancer between the hot inner surface 15 of the tube 10 and the adsorbent particles 14. The matrix structure of the insert 13 efficiently and evenly distributes heat to the mass of adsorbent particles.

Similarly, during step c) the insert 13 facilitates the removal of heat from the hot adsorbent to the surface of the tube 10.

Fig. 4 shows a variant wherein the insert 13 and the adsorbent particles 14 are loaded between heat exchange plates 20, 21, which can be parallel or arranged radially. According to the example of the figure, the plates 20, 21 are arranged radially and the channel 12 is given by the space between the plates 20, 21.

Said channel 12 can be traversed with axial flow or with axial-radial flow. In the latter case, said channel 12 is also delimited by a lateral surface (not shown).

The plates 20, 21 are internally traversed by the heating or cooling medium.

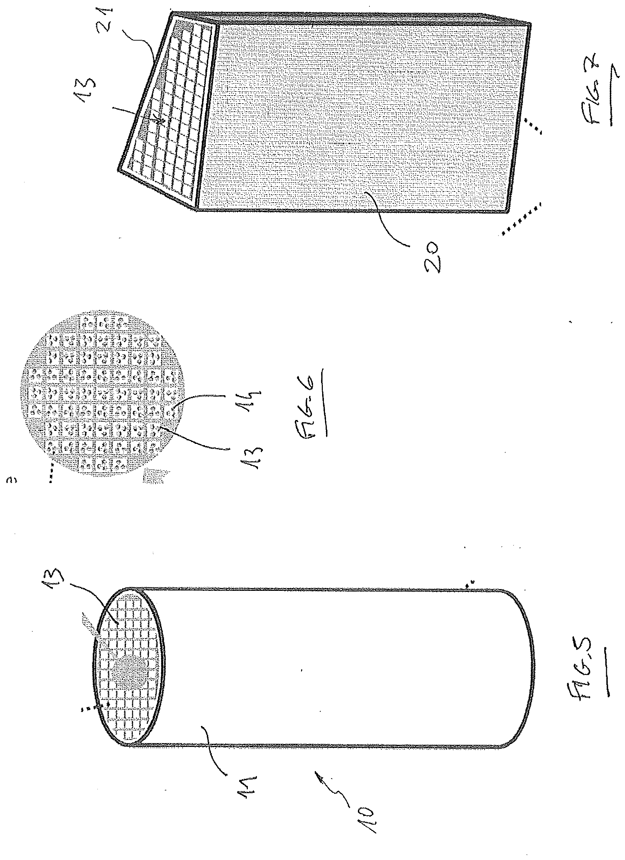

Figs. 5 to 7 illustrate an embodiment wherein the insert 13 has a regular structure. The insert 13 in an embodiment has a grid-like structure, for example a regular matrix structure. As in the embodiment of figs. 2 to 5, the voids of the insert 13 are filled with the adsorbent material.

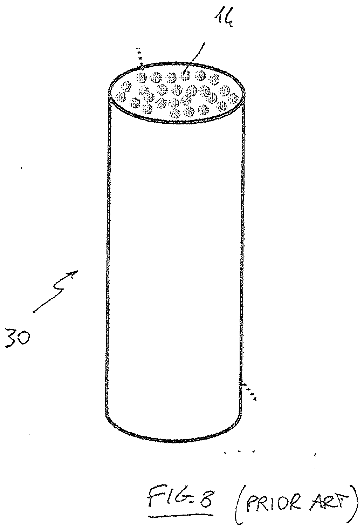

Fig. 8 illustrates a prior art tube 30 filled with adsorbent particles 14.

### Examples

The following examples show the advantages of the adsorber of the invention compared to a traditional packed bed used for indirectly heated TSA process according to the cycle of Fig. 1.

Said examples relate to the capture of CO2 from a stream containing N2 and CO2 (e.g. a combustion flue gas). The inlet conditions of said stream are reported in Table 1 below.

**Table 1**

| ***Temperature [K]*** | ***Pressure [atm]*** | ***Mole Fraction CO₂ [*-*]*** | ***Mole Fraction N₂ [*-*]*** |
|---|---|---|---|
| 303 | 1 | 0.11 | 0.89 |

The adsorbent material is zeolite 13X.

The experimental apparatus of the prior art is a jacketed tube filled with adsorbent. The experimental apparatus of the invention is a jacketed tube filled with adsorbent and conductive inserts. Said tubes are heated/cooled in the shell side with a suitable heat transfer fluid.

Three tubes were tested, with different inner diameters and the same length, as indicated in Table 2. The temperatures of the heating and cooling fluids are also reported in Table 2.

**Table 2**

| ***Temperature Heating [K]*** | ***Temperature Cooling [K]*** | ***Tube Length [m]*** | ***Tube Inner Diameters [mm]*** |
|---|---|---|---|
| 423 | 303 | 1.2 | 30 - 45 - 60 |

Table 3 shows the parameters adopted in the various experiments. In particular, the inner diameter of the tube, the material of the insert, the void fraction and the time duration of the cycle steps (i.e. adsorption, heating, cooling) are indicated.

The time duration of the cycle steps have been selected to achieve a CO2 purity of about 78%(mol) and a CO2 recovery of about 55% in each experiment.

**Table 3**

| ***Experiment*** | ***Tube Inner Diameter [mm]*** | ***Insert Material type and void fraction*** | ***Adsorption Time [s]*** | ***Heating Time [s]*** | ***Cooling Time [s]*** | ***Total cycle time [s]*** |
|---|---|---|---|---|---|---|
| Prior art | 30 | none | 500 | 2000 | 1500 | 4000 |
| Invention Exp 1 | 30 | Aluminum open cell foam with 97% void fraction | 450 | 900 | 450 | 1800 |
| Invention Exp 2 | 30 | Al 85% void | 450 | 1300 | 700 | 2450 |
| Invention Exp 3 | 30 | Stainless steel open cell foam with 85% void fraction | 450 | 1800 | 1350 | 3600 |
| Invention Exp 4 | 45 | Al 97% void | 450 | 1350 | 900 | 2700 |
| Invention Exp 5 | 60 | Al 97% void | 450 | 2700 | 1350 | 4500 |

Table 4 shows the performances of the various experiments in terms of productivity of CO2 per unit mass of adsorbent and productivity of CO2 per unit volume of the adsorber tube.

Specific productivities of the cycle are expressed in kg/h CO2 per weight of the adsorbent material and in kg/h CO2 per volume the adsorber tube, so as to account for the fact that inserts take up some of the space of the adsorber tube.

**Table 4**

| ***Experiment*** | ***Productivity [kgCO2*/*h per ton of adsorbent]*** | ***Productivity [kgCO2*/*h per m3 volume of tube]*** |
|---|---|---|
| Prior art | 30 | 20 |
| Invention Exp 1 | 76 | 45 |
| Invention Exp 2 | 62 | 32 |
| Invention Exp 3 | 42 | 21 |
| Invention Exp 4 | 46 | 27 |
| Invention Exp 5 | 32 | 20 |

The following can be drawn from the examples:
For the same tube inner diameter (e.g. 30 mm), namely the same heat transfer area, the adsorber according to the invention allows to obtain significantly higher productivities both per ton of adsorbent and per volume of tube (see prior art vs experiments 1, 2 and 3). This entails much less adsorbent and much smaller equipment size for the same CO2 production rate in the adsorber according to the invention.

For the same tube inner diameter (e.g. 30 mm), the adsorber of the invention using aluminium open cell foam with 97% void fraction (experiment 1) allows to achieve higher productivities than experiments with smaller void fraction.

The material of the insert also has an effect on the performances. For example, aluminium open cell foam inserts (experiments 1, 2) entail higher productivity than steel open cell foam inserts (experiment 3). Productivity obtained with steel open cell foam inserts (experiment 3) is still higher than prior art.

The invention can also be used to reduce the heat exchange area required; for example, in experiment 4 a tube with an inner diameter of 45 mm allows to obtain higher productivity than the prior art. A tube with an inner diameter of 45 mm requires 67% of the heat exchange area of the prior art system using a tube with an inner diameter of 30 mm.

The heat exchange area can be reduced even more according to the invention. Experiment 5, which uses a tube inner diameter of 60 mm, allows to obtain a productivity comparable to that of the prior art with halved surface.

## Claims

1. Adsorber for indirectly heated temperature swing adsorption, the adsorber comprising:
at least one channel containing at least one adsorbent material in the form of solid adsorbent particles,
at least one insert made of a thermally conductive material and inserted into said at least one channel,
wherein said at least one insert has a void fraction and said adsorbent particles fill at least partially said void fraction of the insert.

2. Adsorber according to claim 1, said insert being any of: an open-cell foam or a structured insert.

3. Adsorber according to claim 2, said insert being an open-cell foam having cell openings and pore cross section in the range of 500 microns to 6 mm, preferably 1 to 4 mm and more preferably 1.5 to 3 mm.

4. Adsorber according to claim 1 or 2, said insert being of a metallic material, preferably aluminium.

5. Adsorber according to any of the previous claims, wherein said at least one adsorbent material is suitable for adsorption of a target component from an input gas, said insert being inert, or less active than said at least one adsorbent material, relative to said adsorption process.

6. Adsorber according to any of the previous claims, said void fraction of the insert being at least 60%, preferably at least 70%, more preferably 70% to 99%, even more preferably 80% to 98%.

7. Adsorber according to any of the previous claims, wherein the insert is made of a material having a thermal conductivity of at least 5 W/m K, preferably at least 10 W/m K and more preferably at least 50 W/m K.

8. Adsorber according to any of the previous claims, having a process gas side and a heat transfer medium side separated from the process gas side, wherein the process gas side comprises the inside of said at least one channel.

9. Adsorber according to claim 8, wherein said at least one channel is delimited by a wall which is in communication with the heat transfer medium side.

10. Adsorber according to any of the previous claims, wherein said at least one channel is formed by a tube or is delimited by adjacent plates.

11. Adsorber according to any of the previous claims, comprising a plurality of channels in parallel, each of said channels comprising said at least one insert and said adsorbent particles.

12. Adsorber according to any of the previous claims, wherein the channel or each channel includes a plurality of inserts.

13. A process of removing a target component from a feed gas, the process comprising:
passing the feed gas through at least one channel of an adsorber, said at least one channel containing particles of at least an adsorbent material and an insert, the insert having a void fraction and the particles of the at least an adsorbent material filling at least partially the void fraction of the insert, and regeneration of the adsorbent including a step of indirect heating of the adsorbent through an external wall of said at least one channel.

14. Process according to claim 13, said process being one of the following: a temperature swing adsorption process (TSA), wherein regeneration is performed by heating the adsorbent material; a pressure temperature swing adsorption process (PTSA), wherein regeneration is performed by heating and depressurizing the adsorbent material; a vacuum temperature swing adsorption process (VTSA), wherein regeneration is performed by heating and depressurizing the adsorbent material to sub-atmospheric pressure.

15. Process according to claim 13 or 14, wherein the regeneration of the adsorbent comprises direct heating and indirect heating of the adsorbent through an external wall of said at least one channel.

16. Process according to any of claims 13 to 15, wherein the target component is carbon dioxide.
